# EUROPÄISCHE PATENTANMELDUNG

(11) **EP 0 945 093 A2**
(43) Veröffentlichungstag der Anmeldung: **29.09.1999**
(21) Anmeldenummer: 99105442.0
(22) Anmeldetag: 17.03.1999
(51) Int. Cl.: A47G 19/00, A47G 19/30

(54) **Halter für Appetithappen**

(30) Priorität: 21.03.1998 DE 19812438
(71) Anmelder: Bernhardt, Barbara, 66121 Saarbrücken (DE); Grosse-Ruyken, Dagmar, 06580 Pegomas (FR)
(72) Erfinder: Bernhardt, Barbara, 66121 Saarbrücken (DE); Grosse-Ruyken, Dagmar, 06580 Pegomas (FR)
(74) Vertreter: Bernhardt, Winfrid, Dr.-Ing.

(57) **Zusammenfassung**

Die Erfindung betrifft einen Halter für Appetithappen. Erfindungsgemäß weist der Halter ein Trägerteil (1e) und einen von dem Trägerteil abstehenden Griffteil (2e) auf, wobei der Trägerteil (1e) und der Griffteil (2e) mit dem Appetithappen eßbar sind.

## Beschreibung

Die Erfindung betrifft einen Halter für Appetithappen.

Die auf Partys und ähnlichen Zusammenkünften beliebte Verabreichung ohne Besteck zu verzehrender Appetithappen, z.B. Kanapees, hat den Nachteil, daß nach dem Verzehr in vielen Fällen eine Reinigung der Hände erforderlich ist. Sind die Happen aufgespießt, so bleiben die Hände zwar meistens sauber, es ergeben sich aber mitunter Probleme bei der Entsorgung des Spießes.

Durch die vorliegende Erfindung sollen diese herkömmlich mit dem Verzehr von Appetithappen verbundenen Folgen vermieden werden.

Erfindungsgemäß wird ein Halter für Appetithappen geschaffen, der durch einen Trägerteil und einen von dem Trägerteil abstehenden Griffteil gekennzeichnet ist, wobei Trägerteil und der Griffteil mit dem Appetithappen eßbar sind.

Durch diese Erfindungslösung wird einerseits eine Verschmutzung der Hände vermieden, indem über den abstehenden Griffteil der Appetithappen ohne Berührung die Hände verschmutzender, insbesondere fettender, Teile gehalten werden kann. Andererseits bereitet der mit dem Appetithappen eßbare Halter keinerlei Entsorgungsprobleme.

Der Halter besteht vorzugsweise aus einem Backmaterial, z.B. einem Laugengebäck mit einer verhältnismäßig harten, nicht fettenden Oberfläche.

In einer besonderen Ausführungsform der Erfindung dient der Trägerteil als Bestandteil des Appetithappens selbst, insbesondere als Belag- oder/und Füllungsträger. Als Belagträger ist der Trägerteil im wesentlichen plattenförmig ausgebildet und entspricht in Form und Abmessungen vorzugsweise etwa einem Kanapee-Belagträger.

In der obengenannten Ausführung kann der Halter etwa in der Form eines in Vorschubrichtung gedrungenen Tortenhebers mit einer Schaufel als Trägerteil geformt oder so ausgebildet sein, daß er eine geschlossen um den Träger- und Griffteil umlaufende Backhaut aufweist. Die umlaufende Backrinde verleiht dem Halter Stabilität. Vorzugsweise ist der Griffteil vollständig mit einer Backhaut überzogen.

Zur seitlichen Halterung eines Belags wie auch zur Versteifung, insbesondere am Übergang zum Griff, kann der Trägerteil bzw. die Schaufel eine Randerhöhung aufweisen.

In einer alternativen Ausführungsform könnte als Trägerteil eine Tasche für die Aufnahme einer Pastetenfüllung vorgesehen sein.

Neben einer besonders einfachen Ausführung mit einem Spieß als Trägerteil könnte der Halter ferner in der Form einer sich in Längsrichtung gedrungenen Gabel oder eines Löffels ausgebildet sein. Möglich wäre auch ein trichterförmiger Trägerteil, von dessen Trichterspitze sich der Griffteil erstreckt.

In einer bevorzugten Ausführungsform weist der Griffteil einen Ringabschnitt auf, durch den zum Halten der Zeigefinger wie durch den Henkel einer Tasse geführt werden kann.

Alternativ weist der Griffteil einen zum Greifen abgeplatteten Abschnitt auf, so daß der Halter bequem zwischen Daumen und z.B. Zeigefinger gehalten werden kann.

In weiterer Ausgestaltung der Erfindung ist wenigstens der Trägerteil mit einer das Eindringen von Feuchtigkeit verhindernden oder verzögernden Haut, insbesondere einem Überzug, versehen. Hierfür sind dünne, den Geschmack des Haltermaterials kaum beeinträchtigende Wachs- oder Fettüberzüge verwendbar.

Vorzugsweise ist der Träger- oder/und Griffteil aus einem tiefgefrorenen oder/und vorgebackenen Teigling herstellbar. Aus solchen als Handelsware zu erwerbenden Teiglingen können nach Bedarf jederzeit frische Halter gebacken werden.

Die Erfindung soll nun anhand von Ausführungsbeispielen und der beiliegenden, sich auf diese Ausführungsbeispiele beziehenden Zeichnungen weiter erläutert und beschrieben werden. Es zeigen:
- Fig. 1: ein erstes Ausführungsbeispiel für einen erfindungsgemäßen Appetithappenhalter, der in der Art eines Tortenhebers geformt ist,
- Fig. 2: ein zweites Ausführungsbeispiel für einen erfindungsgemäßen, eine Blätterteigtasche aufweisenden, Appetithappenhalter,
- Fig. 3: ein drittes Ausführungsbeispiel für einen erfindungsgemäßen Appetithappenhalter, der als Spieß verwendbar ist,
- Fig. 4: ein viertes Ausführungsbeispiel für einen erfindungsgemäßen Appetithappenhalter mit einem trichterförmigen Trägerteil,
- Fig. 5: ein fünftes Ausführungsbeispiel für einen erfindungsgemäßen, als Gabel ausgebildeten, Appetithappenhalter,
- Fig. 6: zur Herstellung des Appetithappenhalters von Fig. 1 vorgefertigte, tiefgefrorene Teiglinge in einer Handelsverpackung,
- Fig. 7: ein sechstes Ausführungsbeispiel für einen Appetithappenhalter in Form eines Kanapee-Belagträgers,
- Fig. 8: einen zur Verpackung geeigneten Stapel aus Belagträgern gemäß Fig. 7,
- Fig. 9: ein siebentes Ausführungsbeispiel für einen erfindungsgemäßen Appetithappenhalter in Form eines Kanapee-Belagträgers,
- Fig. 10: ein achtes Ausführungsbeispiel für einen erfindungsgemäßen Appetithappenhalter in Form eines Kanapee-Belagträgers mit einem abgebogenen Griffteil,
- Fig. 11: Backkörper zur Bildung von Belagträgern gemäß Fig. 9 und 10, und
- Fig. 12: ein neuntes Ausführungsbeispiel für einen erfindungsgemäßen Appetithappenhalter.

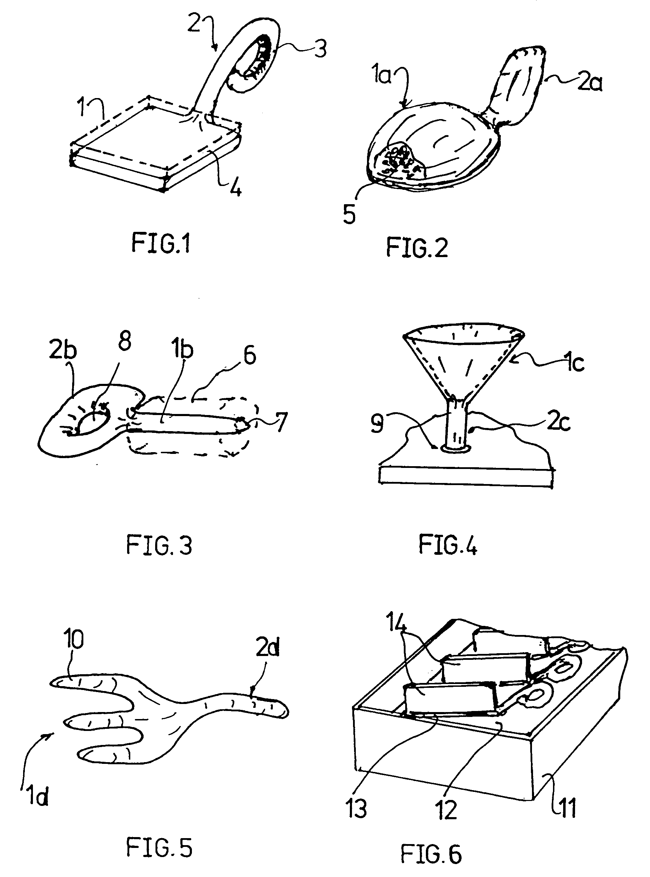

Es wird nun auf Fig. 1 Bezug genommen, wo mit dem Bezugszeichen 1 ein Trägerteil und mit dem Bezugszeichen 2 ein Griffteil eines etwa in der Form eines gedrungenen Tortenhebers gestalteten Appetithappenhalters bezeichnet ist.

Der Trägerteil 1 dient zur Herstellung eines Kanapees, für das es den aus Backmaterial bestehenden Träger eines durch Strichlinien angedeuteten Belags 4 bildet.

Der Griffteil 2 weist einen Ringabschnitt 3 auf, der eine zum Durchführen eines Zeigefingers geeignete Ringweite aufweist. Der Halter kann über den Griffteil 2 daher wie eine Tasse über ihren Henkel gehalten werden.

In dem gezeigten Ausführungsbeispiel besteht der Trägerteil 1 und der Griffteil 2 aus einem Laugengebäck, so daß eine glatte, nicht fettende oder klebende Oberfläche gebildet ist. Darüber hinaus verleiht dieses Backmaterial dem Halter eine zweckentsprechende Stabilität.

Es wäre auch denkbar, lediglich den Griffteil aus Laugengebäckmaterial herzustellen, während der Trägerteil 1 aus einem für einen Belagträger besser geeigneten, insbesondere aus Brotteig hergestellten Backmaterial besteht.

Bei dem Ausführungsbeispiel von Fig. 2 ist ein Trägerteil 1 a als Blätterteigtasche, die eine Pastetenfüllung 5 enthält, ausgebildet. Ein Griffteil 2a ist in dem betreffenden Ausführungsbeispiel als abgeplatteter Körper ausgebildet, der bequem zwischen Daumen und Zeigefinger gehalten werden kann. Der Griffteil 2a besteht im Unterschied zum Trägerteil 1 a nicht aus Blätterteig, sondern einem stabileren Backmaterial.

Bei dem Ausführungsbeispiel von Fig. 3 ist ein Trägerteil 1b in Form eines Dorns ausgebildet, auf den z.B. Appetithappen in Form von Röllchen, wie z.B. Schinkenröllchen, aufsteck- oder aufwickelbar sind.

Der Trägerteil 1b weist eine Spitze 7 auf, so daß der Halter auch als Spieß verwendet werden kann. Ein in dem gezeigten Ausführungsbeispiel plattenförmig mit einer Mittenöffnung 8 ausgebildeter Griffteil 2b ist zum Halten zwischen Daumen und Zeigefinger vorgesehen, wobei die Mittenöffnung 8 einen besonders griffigen Sitz bildet.

Der Halter von Fig. 3 besteht wie der Halter von Fig. 1 aus einem Backmaterial, aus dem z.B. Laugenbrezeln hergestellt sind.

Bei dem Ausführungsbeispiel von Fig. 4 ist ein Trägerteil 1c trichterförmig ausgebildet. Von der Trichterspitze des Trägerteils 1c erstreckt sich in Richtung der Trichterachse ein Griffteil 2c. Der Griffteil 2c ist in eine Steckhalterung 9 eingeführt. Solche Steckhalterungen könnten z.B. in einer Handelsverpackung für solche Halter oder für zur Herstellung der Halter vorgefertigter Teiglinge vorgesehen sein.

Zum Verzehr wird der Halter, dessen trichterförmiges Trägerteil z.B. eine Ragoutfüllung enthält, aus der Steckhalterung 9 herausgezogen.

Eine in dem trichterförmigen Träger 1c untergebrachte Füllung läßt sich besonders bequem ohne die Gefahr einer Vertchüttung verspeisen, indem vom Trichterhand her gleichmäßig rundum abgebissen wird.

In Fig. 5 ist ein als gedrungene Gabel ausgebildeter Halter mit einem Trägerteil 1d und einem Griffteil 2d gezeigt. Der aus einem Brezelbackmaterial hergestellte Gabelhalter besitzt drei Gabelzinken 10, auf die z.B. Happenröllchen, die zwecks abwechslungsreicher Gestaltung von unterschiedlicher Art sein können, aufsteckbar sind.

Bei allen in den Fig. 1 bis 5 gezeigten Ausführungsbeispielen ist gewährleistet, daß es beim Halten des Appetithappens über den abstehenden Griffteil nicht zu einer Verschmutzung der Hand durch einen insbesondere fettenden oder klebenden Bestandteil des Appetithappens kommen kann.

In Fig. 6 ist eine Handelsverpackung 11 mit einem Zwischenboden 12 gezeigt, in welchem Stecköffnungen 13 für vorgefertigte, vorgebackene Teiglinge 14 zur Herstellung des Halters von Fig. 1 einsteckbar sind. In der Handelsverpackung 11 können die Teiglinge z.B. in Tiefkühltruhen zum Verkauf angeboten werden.

Es wäre möglich, den Träger- und/oder Griffteil als Teigling oder/und vorgebacken in einer Verpackung getrennt anzubieten, wobei die Zusammensetzung der Teile zu einem Halter dann vor dem Backen erfolgt.

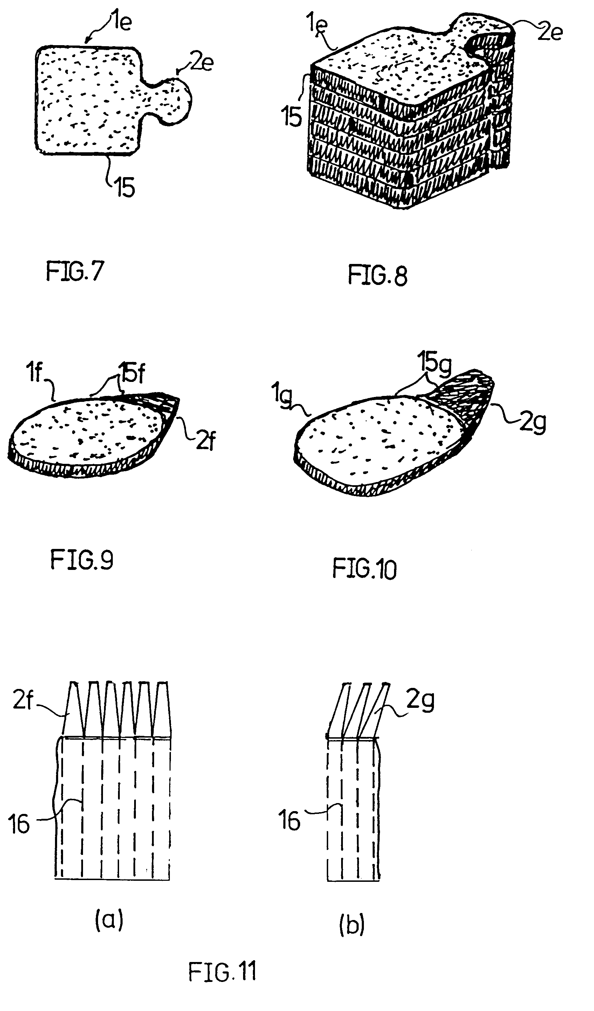

Es wird nun auf die Fig. 7 und 8 Bezug genommen, wo mit dem Bezugszeichen 1e ein Trägerteil in Form eines Kanapee-Belagträgers und mit 2e ein damit einstückig verbundener Griffteil bezeichnet ist. Um den Belagfräger 1e einschließlich Griffteil 2e ist umlaufend als Backhaut eine Rinde 15 gebildet, die dem Halter eine hohe Stabilität verleiht.

Beim Verzehr kommt die Hand nur mit der Rinde des Griffteils 2e in Berührung.

Wie aus Fig. 8 hervorgeht, lassen sich Belagträger gemäß Fig. 7 zur Verpackung stapeln, wobei durch einen dem Stapelquerschnitt entsprechenden Verpackungsquerschnitt für eine bruchsichere Halterung der Belagträger innerhalb der Verpackung gesorgt werden kann. Für den Stapel gemäß Fig. 8, der wesentlich höher, als dort gezeigt, sein kann, kommt z.B. eine Verpackung aus einer durchsichtigen, steifen Kunststoffolie in Betracht.

Fig. 9 zeigt ein Ausführungsbeispiel, bei dem ein Griffteil 2f eines Kanapee-Belagträgers vollständig mit einer Rinde überzogen ist, wobei die Rinde geschlossen vom Griffteil 2 aus um einen Trägerteil 1f randseitig umläuft.

Bei dem Ausführungsbeispiel von Fig. 10 für einen Kanapee-Belagträger mit einem Trägerteil 1g und einem Griffteil 2g ist der vollständig mit einer Rinde 15g überzogene Griffteil 2g nach oben abgebogen, so daß er leichter als bei dem vorangehenden Ausführungsbeispiel ergriffen werden kann.

Fig. 11a zeigt einen Backkörper, der sich gemäß Schnittlinien 16 in Kanapee-Belagträger nach Fig. 9 zerschneiden läßt. An dem Backkörper sind Teile zur Bildung der Griffteile 2f vorgeformt, die beim Backen vollständig mit einer Rinde überzogen werden.

In Fig. 11b sind diese Teile abgewinkelt, so daß beim Zerschneiden Kanapee-Belagträger entsprechend Fig. 10 mit einem abgewinkelten Griffteil 2g entstehen.

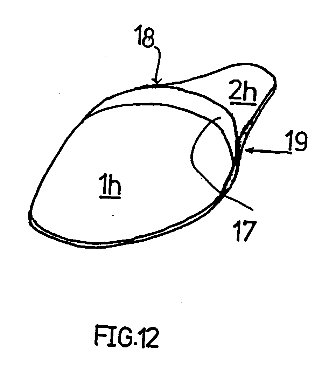

Fig. 12 zeigt einen vor allem unter Festigkeitsgesichtspunkten gestalteten Halter.

Der Trägerteil 1h besteht aus einem vergleichsweise dünnen Teigboden. Er könnte unmittelbar einen Belag aus Fisch, Pastete, Käse usw. tragen oder aber auch erst einen Zwischenbelag z.B. aus einem lockeren Weißbrotteig. Der Zwischenbelag könnte durch einen Aufstrich mit dem Teig des Trägerteils 1h verbunden sein.
Der Trägerteil 1h verbreitert sich zunächst von seinem vorderen Ende her zu dem Griffteil 2h hin, so daß er umso mehr Festigkeit erlangt, je größer der Hebelarm des zu tragenden Belages wird.
Am hinteren, gebogenen Ende erlangt er dann Festigkeit durch eine nach oben abgewinkelte oder abgebogene Randerhöhung 17. An der Randerhöhung 17 ist der Griffteil 2h angeformt. Er läuft, sich verbreiternd, wie bei 18 zu erkennen, und sich verdickend, wie bei 19 angedeutet, an der Randerhöhung 17 aus. Die Randerhöhung 17 setzt sich ihrerseits an dem Trägerteil 1h noch etwas fort und läuft dann aus.
Durch ihre Biegung kann die Randerhöhung 17 in erhöhtem Maße Gewicht und Drehmoment aufnehmen, das in den Griffteil 2h übergeleitet wird. Die stabilste Ausbildung hat der Halter damit an der Stelle der stärksten Belastung zwischen dem Griffteil 2h und dem Trägerteil 1h.
Statt der Biegung wären auch Winkelungen möglich. Der Trägerteil 1h könnte auch trapezförmig oder dreieckig oder, unter Verzicht auf eine Verbreiterung zu der Randerhöhung 17 und dem Griffteil 2h hin, rechteckig sein.

## Patentansprüche

1. Halter für Appetithappen,
gekennzeichnet durch einen Trägerteil (1) und einen von dem Trägerteil (1) abstehenden Griffteil (2), wobei der Trägerteil (1) und der Griffteil (2) mit dem Appetithappen eßbar sind.

2. Kalter nach Anspruch 1,
dadurch gekennzeichnet,
daß der Trägerteil (1) als Belag- oder/und Füllungsträger selbst Bestandteil des Appetithappens ist.

3. Kalter nach Anspruch 1 oder 2,
dadurch gekennzeichnet,
daß der Trägerteil (1;1e;1f;1g) in Form und Abmessungen etwa einem Kanapee-Belagträger, insbesondere einem Teigboden, entspricht.

4. Halter nach einem der Ansprüche 1 bis 3,
dadurch gekennzeichnet,
daß er eine geschlossen um den Trägerteil (1) und den Griffteil (2) umlaufende, vorzugsweise mindestens den Griffteil vollständig umschließende, Backhaut (15) aufweist.

5. Halter nach einem der Ansprüche 1 bis 4,
dadurch gekennzeichnet,
daß der Trägerteil (1) z u dem Griffteil (2) hin mit zunehmender Festigkeit, vorzugsweise zunehmender Breite, ausgebildet ist.

6. Halter nach einem der Ansprüche 1 bis 5,
dadurch gekennzeichnet,
daß der Trägerteil (1) am Übergang zu dem Griffteil (2) eine, vorzugsweise gebogene oder gewinkelte, Randerhöhung (15) aufweist, die sich vorzugsweise beiderseits des Griffteils fortsetzt und mindestens einen Teil des Trägerteils (1) einfaßt.

7. Halter nach einem der Ansprüche 1 bis 6,
dadurch gekennzeichnet,
daß wenigstens der Trägerteil einen das Eindringen von Feuchtigkeit verhindernden oder verzögernden Überzug aufweist.

8. Halter nach einem der Ansprüche 1 bis 7,
dadurch gekennzeichnet,
daß der Trägerteil und/oder Griffteil aus einem tiefgefrorenen oder/und vorgebackenen Teigling (14) herstellbar ist.

9. Halter nach einem der Ansprüche 1 bis 8,
dadurch gekennzeichnet,
daß wenigstens der Griffteil aus einem Laugengebäck besteht.

10. Teigling (14) für die Herstellung eines Halters nach einem der Ansprüche 1 bis 9.
